(19) Europäisches Patentamt

European Patent Office

Office européen des brevets

(11) Publication number: **0 210 075 B1**

## EUROPEAN PATENT SPECIFICATION

(45) Date of publication of patent specification: **12.06.91** (51) Int. Cl.⁵: **B60R 16/02**

(21) Application number: **86305650.3**

(22) Date of filing: **23.07.86**

(54) Electrical appliance for use with a motor car.

(30) Priority: **23.07.85 GB 8518555**

(43) Date of publication of application:
**28.01.87 Bulletin 87/05**

(45) Publication of the grant of the patent:
**12.06.91 Bulletin 91/24**

(84) Designated Contracting States:
**AT BE CH DE FR GB IT LI LU NL SE**

(56) References cited:
**DE-U- 8 436 765**
**FR-A- 1 166 725**
**US-A- 3 163 728**
**US-A- 4 154 324**

(73) Proprietor: **Yang, Tai-Her**
**5-1 Taipin Street**
**Si-Hu Town Dzan-Hwa(TW)**

(72) Inventor: **Yang, Tai-Her**
**5-1 Taipin Street**
**Si-Hu Town Dzan-Hwa(TW)**

(74) Representative: **Arthur, Bryan Edward et al**
**Withers & Rogers 4 Dyer's Buildings Holborn**
**London EC1N 2JT(GB)**

Rank Xerox (UK) Business Services

## Description

The invention relates to an electrical appliance for use with motor cars.

It is usual for motor cars to carry electrical wires for a number of purposes. For example, a car may carry cables for connection to the batteries of another car to provide a "jump start" should the batteries of one of the cars be fully discharged. The car may also carry a portable light equipped to plug into the electrical system, and electrically operated jacks, tyre inflators and warning lights. Also, particularly when used for camping, appliances such as refrigerators, electric kettles or coffee makers may be carried, each with its own connected lead. The invention provides an appliance which enables the number of wires carried in a car to be reduced, with a gain in economy and convenience.

DE-U-8436765 discloses an electrical appliance comprising a control box housing an overload circuit breaker, at least two electrical appliance sockets in a common casing, and a flying input lead connected through the overload circuit-breaker to the sockets.

The present invention provides such an electrical appliance, characterised in that said input lead has a length of at least two metres and comprises a twin core cable, or a pair of single core cables, terminated with means for connection (101), directly or indirectly, to a car battery, in that a relatively short flying output lead, likewise terminated, is also provided, the input lead being connected through the overload circuit breaker (103) to the flying output lead, whereby, when the input lead is connected to such a car battery, the flying output lead can be connected to the discharged car battery of another car to provide a jump start, and in that said electrical appliance sockets are located within appropriate ends of a tubular portion of said control box, the control box being in the form of an elongate, generally flat moulding whose exterior has notches or concavities which can locate flat coils of said flying input lead wound around said moulding.

The invention, which is defined in the claims appended hereto will now be described by way of example only with reference to the accompanying drawings in which:

Figure 1 is a section through the appliance of the invention;
Figure 2 is an electrical circuit diagram of the appliance;
Figure 3 is a section through a lamp unit for use with the appliance;
Figure 4 shows the arrangement for cable storage in a preferred form of the appliance of the invention; and
Figure 5 is a diagram illustrating various uses of the invention.

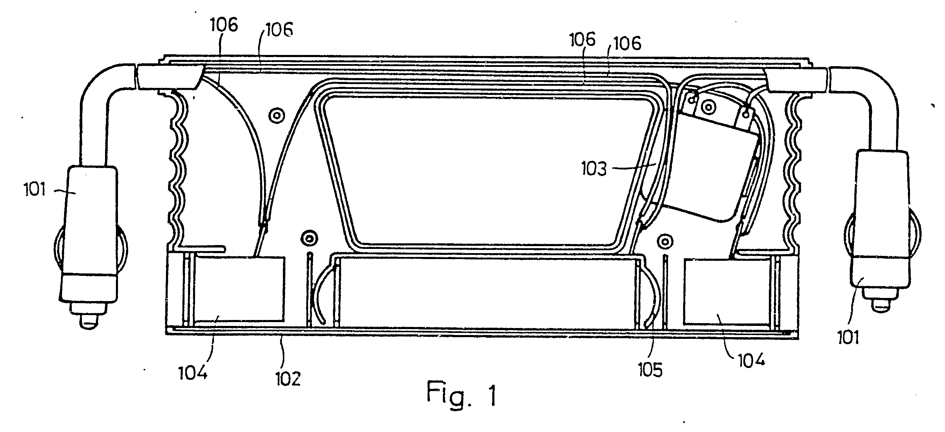

Referring first to Figure 1, the appliance of the invention comprises a control box 102, which is preferably of Bakelite or other insulating plastic material from which protrude input and output leads terminating in connectors 101. The leads may comprise twin core cables or a pair of separate cables, and the terminating connectors are intended for connection to the terminals of a car battery, either directly by clipping onto the battery terminals, or indirectly by plugging into a socket connected into the electrical system of the car, and so eventually to the battery.

The input lead is relatively long being at least two metres in length, and preferably at least three or four, and is connected within the casing 102 to an overload circuit breaker 103. From this circuit breaker connections are taken to a pair of electrical appliance sockets 104,105 housed within the casing 102 and then to the output lead, which similarly terminates in connection means such as a pair of clips or a plug, and which is relatively short compared with the input lead.

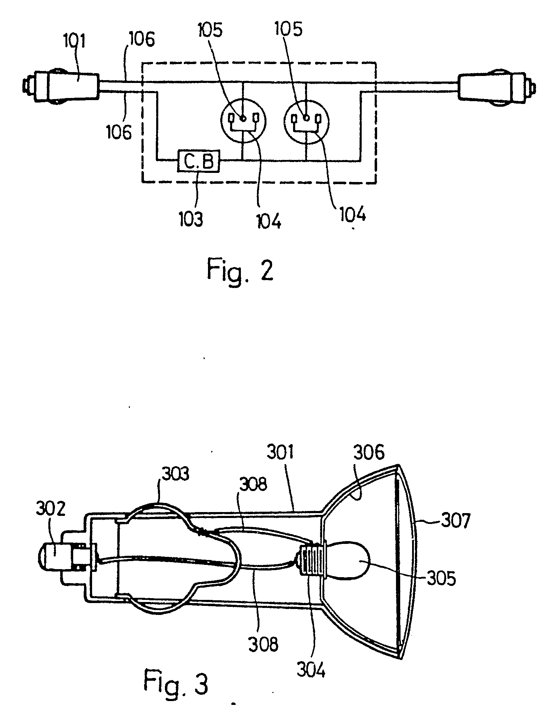

Figure 2 is a circuit diagram of the appliance, the live lead from the input connector 101 being taken to the circuit breaker 103 and then to socket contacts 104 and the output lead. The return lead 106 is connected to the other terminal of the appliance sockets 105 and then directly to the output lead.

In a preferred form of the invention, the appliance also includes a lamp unit, shown in Figure 3, which is arranged to plug directly into one of the appliance sockets 104. With this lamp unit in place, and with the input lead connected to the car electrical system, the appliance constitutes a portable hand lamp.

The lamp unit comprises a cylindrical outer casing 301 provided with an end contact 302 and a side contact 303 which respectively engage the end and side contacts 105,104 of the appliance sockets. A lamp holder 304 is connected to these contacts by leads 308 and the lamp 305 is surrounded by a reflector 306, and protected by a front glass 307 . Optionally, a switch (not shown in the drawings) may be provided to enable the lamp to be switched on and off as desired.

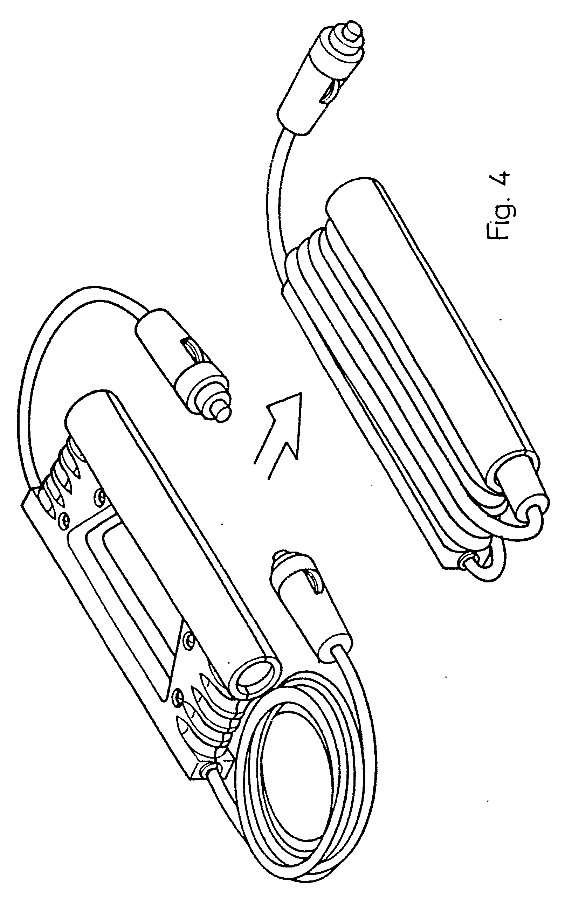

The casing 102 provides for the stowage of the leads, particularly the input lead, which needs to be of considerable length for convenient use of the appliance, by providing notches or concavities in the casing, so that the leads may conveniently be wound round it. Such an arrangement is shown diagrammatically in Figure 4.

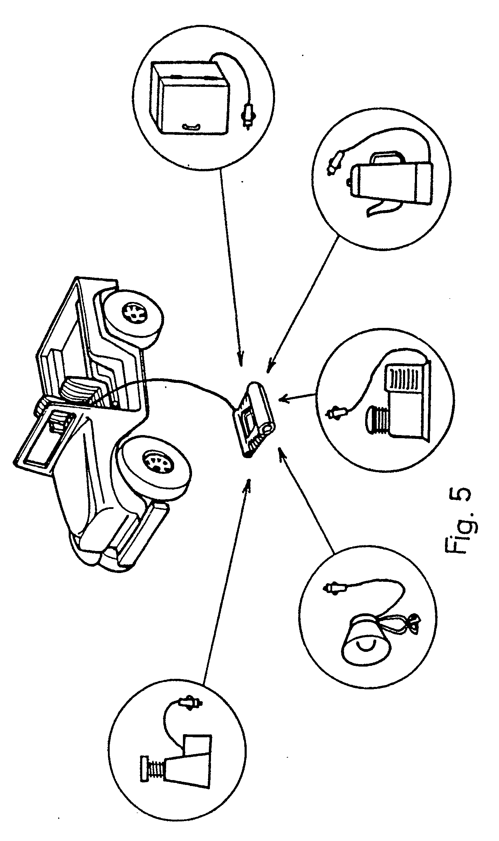

Figure 5 indicates diagrammatically some of the principal uses of the appliance of the invention. With the input lead connected to the car, the appliance sockets may be used for connection to picnic or camping equipment such as electric lighting fittings, coffee percolators, refrigerators and so on. The appliance is also very valuable in emergency situations, when it may be used to connect to electric tyre inflators, electric jacks, and so on, or when the output lead may be connected to the discharged battery of another car in order to provide a jump start. In such applications, particularly at night, the lamp unit may be plugged into one of the appliance sockets to facilitate the operation.

The circuit breaker built into the appliance of the invention protects the car battery in case of accidental overload, for example, by the output connections being accidentally short-circuited.

## Claims

1. An electrical appliance comprising a control box housing an overload circuit breaker (103), at least two electrical appliance sockets in a common casing (102), and a flying input lead connected through the overload circuit-breaker to the sockets, characterised in that said input lead has a length of at least two metres and comprises a twin core cable, or a pair of single core cables, terminated with means for connection (101), directly or indirectly, to a car battery, in that a relatively short flying output lead, likewise terminated, is also provided, the input lead being connected through the overload circuit breaker (103) to the flying output lead, whereby when the input lead is connected to such a car battery, the flying output lead can be connected to the discharged car battery of another car to provide a jump start, and in that said electrical appliance sockets are located within opposite ends of a tubular portion of said control box, the control box being in the form of an elongate, generally flat moulding whose exterior has notches or concavities which can locate flat coils of said flying input lead wound around said moulding.

2. An electrical appliance according to claim 1 wherein said flying input lead is terminated with a plug (101) and said plug can be plugged into one of said sockets to prevent said coils of said input lead from unwinding from said moulding.

3. An electrical appliance according to any preceding claim in combination with a low voltage electrical appliance arranged to plug directly into one of the appliance sockets.

## Revendications

1. Un appareil électrique comprenant un boîtier de commande recevant un disjoncteur de protection contre des surcharges (103), au moins deux prises électriques dans un boîtier commun (102) et un conducteur volant d'entrée raccordé aux prises à travers le disjoncteur de protection contre des surcharges, caractérisé en ce que ledit conducteur d'entrée présente une longueur d'au moins 2 mètres et comprend un câble à deux conducteurs ou deux câbles à un seul conducteur se terminant par des moyens de raccordement (101) directs ou indirects à une batterie de véhicule, en ce qu'un conducteur volant de sortie relativement court et terminé de la même manière, est également prévu, le conducteur d'entrée étant connecté, via le disjoncteur de protection contre des surcharges (103), au conducteur volant de sortie, de manière que, lorsque le conducteur d'entrée est raccordé à une telle batterie de véhicule, le conducteur volant de sortie puisse être raccordé à la batterie de véhicule déchargée d'un autre véhicule afin de permettre un démarrage par branchement extérieur, et en ce que lesdites prises d'appareil électrique sont disposées à l'intérieur des extrémités opposées d'une partie tubulaire dudit boîtier de commande qui présente la forme d'une pièce moulée oblongue de forme générale plate dont la partie extérieure comporte des encoches ou des concavités qui peuvent positionner les spires planes dudit conducteur volant d'entrée enroulé autour de ladite pièce moulée.

2. Un appareil électrique selon la revendication 1, dans lequel ledit conducteur volant d'entrée se termine par une fiche (101) qui peut être branchée dans l'une desdites prises afin d'empêcher lesdites spires dudit conducteur d'entrée de se dérouler de ladite pièce moulée.

3. Un appareil électrique selon l'une quelconque des revendications précédentes, en combinaison avec un dispositif électrique à basse tension adapté à s'enficher directement dans l'une des prises de l'appareil.

## Ansprüche

1. Elektrisches Gerät mit einem Steuergehäuse, das einen Überlast-Stromkreisunterbrecher (103) , zumindest zwei elektrische Gerätebuchsen in einem gemeinsamen Gehäuse (102) sowie eine fliegende Eingangsleitung enthält, die über den Überlast-Stromkreisunterbrecher mit den Buchsen verbunden ist, dadurch gekennzeichnet,

- daß die genannte Eingangsleitung eine Länge von zumindest zwei Metern hat und ein zweiadriges Kabel oder zwei einadrige Kabel aufweist und in einem Verbindungsmittel (101) für unmittelbare oder mittelbare Verbindung mit einer Fahrzeugbatterie endigt,

- daß eine verhältnismäßig kurze, fliegende Ausgangsleitung, die in gleicher Weise endigt, ebenfalls vorgesehen ist und die Eingangsleitung über den Überlast-Stromkreisunterbrecher (103) mit der fliegenden Ausgangsleitung verbunden ist, wodurch, wenn die Eingangsleitung mit einer derartigen Fahrzeugbatterie verbunden ist, die fliegende Ausgangsleitung mit der entladenen Fahrzeugbatterie eines anderen Fahrzeuges verbindbar ist, um einen Überbrückungsstart zu ermöglichen, und dadurch,

- daß die genannten elektrischen Gerätebuchsen innerhalb entgegengesetzter Enden eines rohrförmigen Teils des genannten Steuergehäuses angeordnet sind und das Steuergehäuse die Form eines länglichen, im wesentlichen flachen Formteils besitzt, dessen Außenseite Kerben oder konkave Bereiche besitzt, die flache Windungen der genannten fliegenden Eingangsleitung in Stellung halten können, die um den genannten Formteil gewunden sind.

2. Elektrisches Gerät nach Anspruch 1, bei dem die genannte fliegende Eingangsleitung in einem Stecker (101) endigt und der genannte Stecker in eine der genannten Buchsen einsteckbar ist, um zu verhindern, daß die genannten Windungen der genannten Eingangsleitung sich von dem genannten Formteil abwickeln.

3. Elektrisches Gerät nach einem vorausgehenden Anspruch in Kombination mit einem elektrischen Gerät für niedrige Spannung, das für ein unmittelbares Einstecken in eine der Gerätebuchsen eingerichtet ist.

Fig. 1

EP 0 210 075 B1

Fig. 2

Fig. 3

Fig. 4

Fig. 5